# EUROPEAN PATENT APPLICATION

(11) **EP 4 776 415 A1**
(43) Date of publication of application: **15.07.2026**
(21) Application number: 25864618.1
(22) Date of filing: 11.09.2025
(51) Int. Cl.: H01M 50/276, H01M 50/28, H01M 50/204, H01M 50/273, H01M 50/30

(54) **BATTERY MODULE AND BATTERY PACK COMPRISING SAME**

(30) Priority: 07.11.2024 KR 20240157511; 30.06.2025 KR 20250087144; 04.09.2025 KR 20250125502
(71) Applicant: LG ENERGY SOLUTION, LTD., Seoul 07335 (KR)
(72) Inventor: SON, Hong Se, Daejeon 34122 (KR); KWON, Hee Yong, Daejeon 34122 (KR); JO, Yeong Shin, Daejeon 34122 (KR); AN, Seong Woo, Daejeon 34122 (KR)
(74) Representative: Plasseraud IP
(86) International application number: PCT/KR2025/014141
(87) International publication number: WO 2026/100957

(57) **Abstract**

The battery module includes a plurality of battery cells, a module frame that accommodates the plurality of battery cells, end plates positioned on a front side and a rear side of the plurality of battery cells, respectively, and a cover frame that covers a top surface and both side surfaces of the module frame. Two or more folding portions are formed on each edge of the cover frame.

## Description

### [Technical Field]

This application is based on and claims priority from Korean Patent Application Nos. 10-2024-0157511, 10-2025-0087144 and 10-2025-0125502, filed on November 7, 2024, June 30, 2025 and September 4, 2025, with the Korean Intellectual Property Office, respectively, the disclosures of which are incorporated herein in their entireties by reference.

The present disclosure relates to a battery module and a battery pack including the same.

### [Background Art]

As alternative energy has recently been developed due to air pollution and energy depletion according to the use of fossil fuels, the demand for secondary batteries capable of storing produced electrical energy is increasing.

As secondary batteries are being used as an energy source for various electronic devices indispensably used in modern society, a required capacity for the secondary batteries is increasing due to the increasing usage and complexity of mobile devices and the development of electric vehicles. In order to meet the user demands, a plurality of battery cells is combined to be used for a small device, while a battery module having a plurality of electrically connected battery cells or a battery pack including these multiple battery modules is used for a vehicle, and the like.

### [Disclosure]

### [Technical Problem]

The present disclosure provides a battery module including a cover frame with improved adhesion and a battery pack including the same, in which it is possible to prevent or suppress separation and detachment of the cover frame from a module frame when venting gas and thermal runaway occur internally.

### [Technical Solution]

The battery module according to the present disclosure includes a plurality of battery cells, a module frame accommodating the plurality of battery cells, end plates positioned on the front side and the rear side of the plurality of battery cells, respectively, and a cover frame covering the top surface and both side surfaces of the module frame, in which two or more folding portions are formed on each of edges of the cover frame.

In the battery module according to the present disclosure, a plurality of first through holes is formed by cutting through limited regions on the top surface of the module frame (200).

In the battery module according to the present disclosure, a plurality of second through holes is formed by cutting through limited regions on the top surface of the cover frame (400).

In the battery module according to the present disclosure, the cover frame (400) is made of a material having heat resistance and flame retardancy.

In the battery module according to the present disclosure, the material includes one or more of mica and fiberglass reinforced plastic (FRP).

In the battery module according to the present disclosure, a plurality of openings is formed by cutting through limited regions of the folding portions along the longitudinal direction (Y-axis direction).

In the battery module according to the present disclosure, the openings have a slit or hole shape.

In the battery module according to the present disclosure, the openings are formed with different areas.

In the battery module according to the present disclosure, three or more folding portions are formed, the openings in the folding portion positioned on the uppermost side and the folding portion positioned on the lowermost side have the same area, and the openings formed in the folding portion formed between the folding portion positioned on the uppermost side and the folding portion positioned on the lowermost side have a wider area than those in the folding portion positioned on the uppermost side.

In the battery module according to the present disclosure, the corner and the folding portions of the cover frame are formed to have a thinner thickness than the thickness of the top surface and the thickness of the side surface of the cover frame.

In the battery module according to the present disclosure, on the top surface of the cover frame, one or more folding lines extending in the longitudinal direction (Y-axis direction) are formed to allow bending at a predetermined angle.

In the battery module according to the present disclosure, the folding portion has a vertical cross section in a zigzag shape.

The battery pack according to the present disclosure includes the above-described battery module.

The battery module case according to the present disclosure includes: a module frame designed to accommodate a plurality of battery cells; end plates which are positioned on the front side and the rear side of the plurality of battery cells, respectively, when the plurality of battery cells is accommodated in the module frame; and a cover frame covering the top surface and both side surfaces of the module frame, in which two or more folding portions, which are designed to have a weaker elastic strength than that of other portions of the cover frame, are formed on each of edges of the cover frame.

In the battery module case according to the present disclosure, a plurality of through holes is formed by cutting through limited regions on the top surface of the cover frame.

In the battery module case according to the present disclosure, the cover frame is made of a material having heat resistance and flame retardancy.

In the battery module case according to the present disclosure, the material includes one or more of mica and fiberglass reinforced plastic.

In the battery module case according to the present disclosure, a plurality of openings is formed by cutting through limited regions in the folding portions along the longitudinal direction.

In the battery module case according to the present disclosure, the openings have a slit or hole shape.

In the battery module case according to the present disclosure, on the top surface of the cover frame, one or more folding lines extending in the longitudinal direction are formed to allow bending at a predetermined angle.

### [Advantageous Effects]

In the battery module according to the present disclosure, since folding portions are formed on each of edges of the cover frame, there is an advantage in that the cover frame is more easily folded and is brought into close contact with the side surface of the module frame.

Also, in the battery module according to the present disclosure, openings are formed by cutting through limited regions in the folding portions. These may facilitate folding of the folding portions, and may alleviate stress that may occur in the folding portions.

### [Description of Drawings]

The following drawings attached hereto illustrate embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is an exploded perspective view illustrating a battery module according to a conventional technology.
FIG. 2 is a perspective view illustrating a battery module according to a first embodiment of the present disclosure.
FIG. 3 is an exploded perspective view illustrating the battery module according to the first embodiment of the present disclosure.
FIG. 4 is a front view of the battery module according to the first embodiment of the present disclosure, as viewed from the front.
FIG. 5 is an exploded perspective view illustrating a battery module according to a second embodiment of the present disclosure.
FIG. 6 is an exploded perspective view illustrating a battery module according to a third embodiment of the present disclosure.
FIG. 7 is an exploded perspective view illustrating a battery module according to a fourth embodiment of the present disclosure.
FIG. 8 is an exploded perspective view illustrating a battery module according to a fifth embodiment of the present disclosure.
FIG. 9 is a vertical cross-sectional view of the corner portion of the cover frame in a battery module according to a sixth embodiment of the present disclosure.
FIG. 10 is an exploded perspective view illustrating a battery module according to a seventh embodiment of the present disclosure.
FIG. 11 is a vertical cross-sectional view of the cover frame in the battery module according to the seventh embodiment of the present disclosure.
FIG. 12 is an exploded perspective view illustrating a battery module according to an eighth embodiment of the present disclosure.
FIG. 13 is a vertical cross-sectional view of the corner portion of the cover frame in the battery module according to the eighth embodiment of the present disclosure.

Corresponding reference characters indicate corresponding components throughout the several views of the drawings. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### [Best Mode]

Hereinafter, with reference to accompanying drawings, descriptions will be made on an embodiment by which a person of ordinary skill in the technical field to which the present disclosure belongs can easily implement the present disclosure. However, in describing the operating principle of the embodiment of the present disclosure, when it is determined that a detailed description of a related known function or configuration may unnecessarily obscure the gist of the present disclosure, the description thereof will be omitted.

Also, the same drawing reference numerals are used for parts having similar functions and actions throughout the drawings. Throughout the specification, when a certain part is said to be connected to another part, this includes not only a case where the parts are directly connected, but also a case where the parts are indirectly connected with other elements interposed therebetween. Also, including a component does not exclude other components unless specifically stated to the contrary but rather means that other components may be further included.

As described above, a battery module is formed with a structure that includes a module frame accommodating a plurality of battery cells and further includes a cover member covering the top surface and both side surfaces of the module frame.

Meanwhile, the module frame is formed by extrusion and injection, and shrinkage may occur during the processing. This may result in a sagging shape on the top surface and the bottom surface of the module frame, or an occurrence of a phenomenon in which a portion is indented inward.

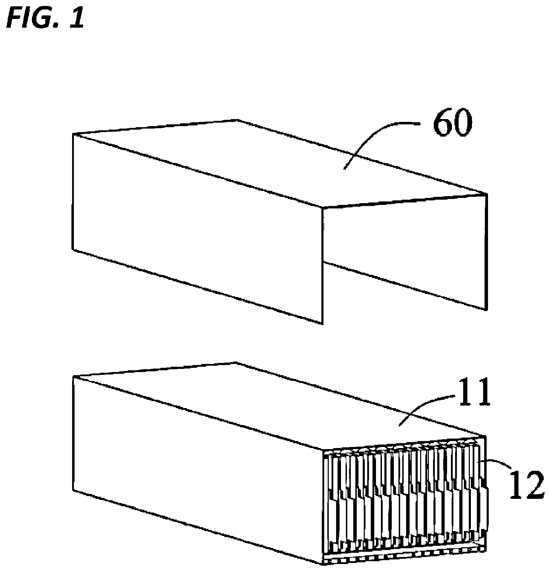

FIG. 1 is an exploded perspective view illustrating a battery module according to a conventional technology. Referring to FIG. 1, the configuration of the battery module according to a conventional technology includes a plurality of battery cells 12, a module case 11 accommodating the plurality of battery cells 12, and a fire prevention cover 60 covering the top surface and both side surfaces of the module case 11.

In the battery module with the structure described above, during the processing, a sagging shape may occur on the top surface and the bottom surface of the module case 11 due to shrinkage.

When the fire prevention cover 60 covering the top surface and both side surfaces of the module case 11 is brought into close contact with the module case 11, a gap may be formed between the module case 11 and the fire prevention cover 60 due to the sagging shape occurring on the top surface and the bottom surface of the module case 11. This may cause a problem in that the fire prevention cover 60 may be detached when gas and thermal runaway occur within the module case 11.

In the present disclosure, in consideration of these problems, provided is a battery module that is designed to allow a cover frame to be more easily brought into close contact with the top surface and the side surface of a module frame.

Hereinafter, with reference to accompanying drawings, descriptions will be made on a battery module including a cover frame with improved adhesion according to the present disclosure and a battery pack including the same.

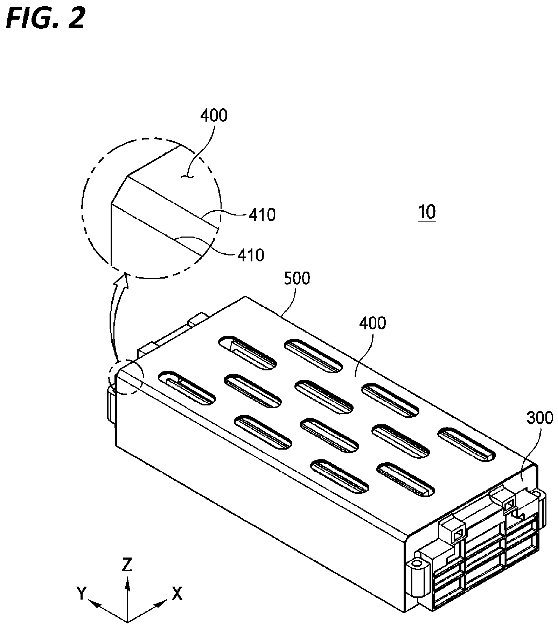

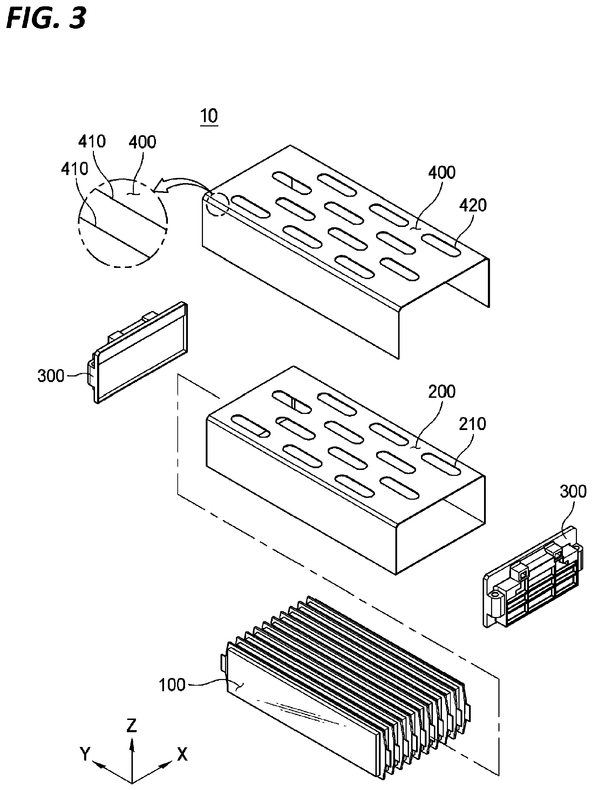

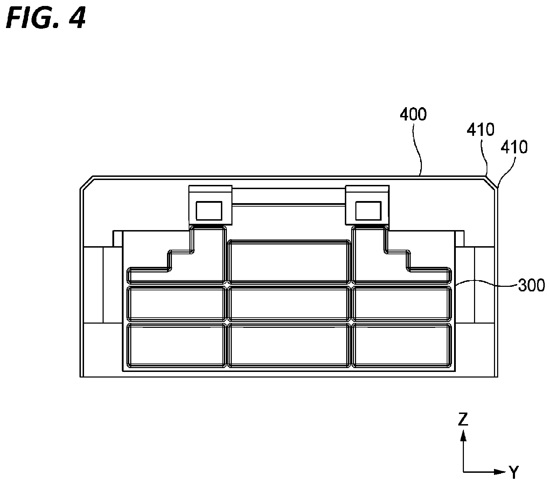

FIG. 2 is a perspective view illustrating a battery module according to a first embodiment of the present disclosure, FIG. 3 is an exploded perspective view illustrating the battery module according to the first embodiment of the present disclosure, and FIG. 4 is a front view of the battery module according to the first embodiment of the present disclosure, as viewed from the front.

In the description with reference to FIGS. 2 to 4, the configuration of a battery module 10 according to the present disclosure includes a battery cell 100, a module frame 200, an end plate 300, and a cover frame 400.

According to an embodiment, the battery cell 100 may be a pouch-type battery cell. The configuration of the battery cell 100 includes an electrode assembly, a pouch case accommodating the electrode assembly, an electrode lead protruding to the outside of the pouch case, and an insulating film positioned between the pouch case and the electrode lead.

The electrode assembly has a structure in which cathodes and anodes are alternately and repeatedly stacked multiple times with separators interposed therebetween. A pair of electrode leads, which includes a cathode lead and an anode lead, is electrically connected to cathode tabs and anode tabs, and is exposed to the outside of the pouch case.

The cathode is manufactured by applying a cathode mixture containing a cathode active material, to a cathode current collector, and drying the cathode mixture. The cathode mixture may further include optionally a binder, a conductive agent, filler, and the like, when necessary.

The cathode current collector may generally have a thickness of about 3 µm to 500 µm. The cathode current collector is not particularly limited as long as it has high conductivity without causing chemical changes in the corresponding battery. For example, stainless steel, aluminum, nickel, titanium, baked carbon, or aluminum or stainless steel whose surface is treated with carbon, nickel, titanium, silver, and the like, may be used. Also, it is possible to increase the adhesive force of the cathode active material by forming fine irregularities on the surface of the cathode current collector, and various forms are possible, including a film, a sheet, a foil, a net, a porous body, a foam, and a nonwoven fabric.

Examples of the cathode active material may include layered compounds such as lithium cobalt oxide (LiCoO₂) and lithium nickel oxide (LiNiO₂) or compounds substituted with one or more transition metals; lithium manganese oxide such as chemical formulas Li₁₊ₓMn₂₋ₓO₄ (wherein x is 0 to 0.33), LiMnO₃, LiMn₂O₃, and LiMnO₂; lithium copper oxide (Li₂CuO₂); vanadium oxide such as LiV₃O₈, V₂O₅, and Cu₂V₂O₇; Ni site-type lithium nickel oxide represented by a chemical formula LiNi₁₋ₓMₓO₂ (wherein M = Co, Mn, Al, Cu, Fe, Mg, B or Ga, and x = 0.01 to 0.3); lithium manganese composite oxide represented by a chemical formula LiMn₂₋ₓMₓO₂ (wherein M = Co, Ni, Fe, Cr, Zn or Ta, and x = 0.01 to 0.1) or Li₂Mn₃MO₈ (wherein M = Fe, Co, Ni, Cu or Zn); LiMn₂O₄ in which a part of Li in the chemical formula is substituted with an alkaline earth metal ion; disulfide compounds; and Fe₂(MoO₄)₃, but are not limited to these.

The anode is manufactured by applying an anode mixture containing an anode active material, to an anode current collector, and drying the anode mixture. The anode mixture may include components such as a conductive agent, a binder, and filler when necessary.

The anode current collector is generally manufactured with a thickness of about 3 µm to 500 µm. The anode current collector is not particularly limited as long as it has high conductivity without causing chemical changes in the corresponding battery. For example, copper, stainless steel, aluminum, nickel, titanium, baked carbon, copper or stainless steel whose surface is treated with carbon, nickel, titanium, silver, and the like, and aluminum-cadmium alloy may be used. Also, as in the cathode current collector, it is possible to strengthen the bonding force of the anode active material by forming fine irregularities on the surface, and the use in various forms such as a film, a sheet, a foil, a net, a porous body, a foam, and a nonwoven fabric is possible.

The separator prevents a short circuit between the above described anode and cathode and allows only lithium ions to move, and an insulating thin film having high ion permeability and mechanical strength is used. The pore diameter of the separator is typically about 0.01 µm to 10 µm, and the thickness is typically about 5 µm to 300 µm. The material for the separator may be any one selected from polyethylene, polypropylene, polyethylene/polypropylene double layer, polyethylene/polypropylene/polyethylene triple layer, polypropylene/polyethylene/polypropylene triple layer, and organic fiber filter paper, but is not limited thereto.

Meanwhile, each of the anode current collector and the cathode current collector is composed of a portion to which a slurry mixed with an active material is applied and an uncoated portion to which no slurry is applied. The electrode tab is formed by cutting the uncoated portion or is formed by connecting a separate conductive member to the uncoated portion through ultrasonic welding, etc. These electrode tabs are assembled to form a tab bundle.

For the pouch case, a pocket portion capable of accommodating the electrode assembly, and an edge portion extending to a predetermined length on the outer periphery of one side of the pocket portion may be formed by using a laminate sheet. The laminate sheet includes an inner coating layer, a metal layer and an outer coating layer.

The inner coating layer comes in direct contact with the electrode assembly, and thus may have insulation and electrolytic resistance, and furthermore should have sealability to ensure airtightness against the outside. That is, the sealing portion where the inner layers are thermally bonded together may have excellent thermal adhesive strength.

The material for the inner coating layer may be selected from polyolefin-based resins such as polypropylene, polyethylene, polyethylene acrylic acid, and polybutylene, polyurethane resins and polyimide resins, which have excellent chemical resistance and good sealing properties, but is not limited thereto. Polypropylene, which is excellent in mechanical properties (such as tensile strength, rigidity, surface hardness, and impact strength) and chemical resistance, may be used.

The metal layer in contact with the inner coating layer corresponds to a barrier layer that prevents moisture or various gases from penetrating into the battery from the outside. As for the material of the metal layer, an aluminum thin film that is lightweight and has excellent moldability may be used.

The outer coating layer is provided on the other side surface of the metal layer. As for the outer coating layer, a heat resistant polymer excellent in tensile strength, moisture permeation prevention and air permeation prevention may be used so as to protect the electrode assembly and to ensure heat resistance and chemical resistance. As an example, nylon or polyethylene terephthalate may be used, but the present disclosure is not limited thereto.

Then, in general, a pair of electrode leads, which includes a cathode lead and an anode lead, is connected to the above-mentioned electrode tab bundles, for example, to a cathode tab bundle and an anode tab bundle, through a method such as welding, and protrudes to the outside of the pouch case.

The insulating film is positioned on the top surface and the bottom surface of the electrode lead, and the electrode lead overlaps the sealing portion of the pouch case to be heat-sealed. In this configuration, electricity generated from the electrode assembly is prevented from flowing to the pouch case via the electrode lead and furthermore, the sealing of the pouch case is maintained.

As for the insulating film, a non-conductive material that does not conduct electricity well may be used. In general, an insulating tape that is easy to attach to the electrode lead and has a relatively thin thickness may be used.

According to an embodiment, the insulating film may be any one or two or more types of materials selected from polyimide (PI), polypropylene (PP), polyethylene (PE), polyethylene terephthalate (PET), polyvinyl chloride (PV), high density polyethylene (HDPE), and epoxy resin, and is heat-sealed and bonded to the resin layer inside the pouch case through heat and pressure.

The description and drawings illustrate only the battery cell 100 having a structure where the electrode leads protrude in both directions on one side and the other side. However, in another embodiment of the present disclosure, it is also possible to use a unidirectional pouch-type battery cell in which the electrode leads protrude together in one direction.

In this configuration, there may be a plurality of battery cells 100, and the battery cells 100 are stacked along one direction so as to facilitate electrical connection therebetween. Then, a battery cell stack is formed. For example, as illustrated in FIG. 3, the battery cells 100 may be stacked along one direction in the X direction.

The module frame 200 accommodates the plurality of battery cells 100, and may be a metal frame having a structure in which both sides are open.

According to an embodiment, on the basis of the battery cell stack formed by stacking the battery cells 100, the module frame 200 may be opened in both directions in which the electrode leads protrude. However, the structure of the module frame 200 illustrated in FIG. 3 is one example, and its shape is not particularly limited as long as a battery cell stack can be accommodated.

Also, the module frame 200 of FIG. 3 is illustrated as a monoframe in the form of a metal plate in which the top surface, the bottom surface and both side surfaces are integrated, but it is possible to employ other forms, such as a form in which the upper cover is coupled to the U-shaped frame with an open top and a form in which the U-shaped frame and the inverted U-shaped frame are combined with each other.

On the top surface of the module frame 200, one or more first through holes 210 are formed.

The first through holes 210 are designed to discharge venting gas to the outside when the venting gas is generated from the battery cells 100 accommodated within the module frame 200. Thus, it is possible to prevent or suppress the internal pressure of the module frame 200 from rising and causing explosion due to the venting gas.

The end plates 300 are positioned on both open sides of the module frame 200 such that the inside of the module frame 200 is placed in a sealed state. Thus, the stored battery cells 100 are protected from the outside.

Also, an opening with a certain area being cut may be formed in the end plate 300. Through the opening, a terminal portion (not illustrated) that allows the battery cells 100 accommodated within the module frame 200 to be electrically connected to an external device may pass through.

The cover frame 400 protects the module frame 200 from the outside. According to an embodiment, the cover frame 400 may be formed in a shape in which the top surface and both side surfaces of the module frame 200 are covered.

According to an embodiment, a module case 500 is formed by the module frame 200, the end plates 300, and the cover frame 400, excluding the battery cells 100.

The cover frame 400 is made of a material having heat resistance and flame retardancy, and the material may include, for example, one or more of mica and fiberglass reinforced plastic (FRP).

Two or more folding portions 410 in a folded shape are formed at the edge of the cover frame 400. However, the number of the folding portions 410 may be one as needed.

The folding portions 410 are configured to have a lower elastic strength than that of other portions of the cover frame 400. When both side surfaces of the cover frame 400 are folded and are brought into close contact with side surfaces of the module frame 200, the cover frame 400 can be more flexibly folded. Thus, both side surfaces of the cover frame 400 may be brought into closer contact with both side surfaces of the module frame 200.

On the top surface of the cover frame 400, one or more second through holes 420 are formed, which serve as passages for discharging venting gas generated within the module frame 200.

When venting gas is discharged to the outside through the second through holes 420, high-temperature byproducts may also be discharged. Then, since the cover frame 400 is provided on a portion of the outer surface of the module frame 200, it is possible to prevent or suppress the byproducts from flowing back again to damage the module frame 200.

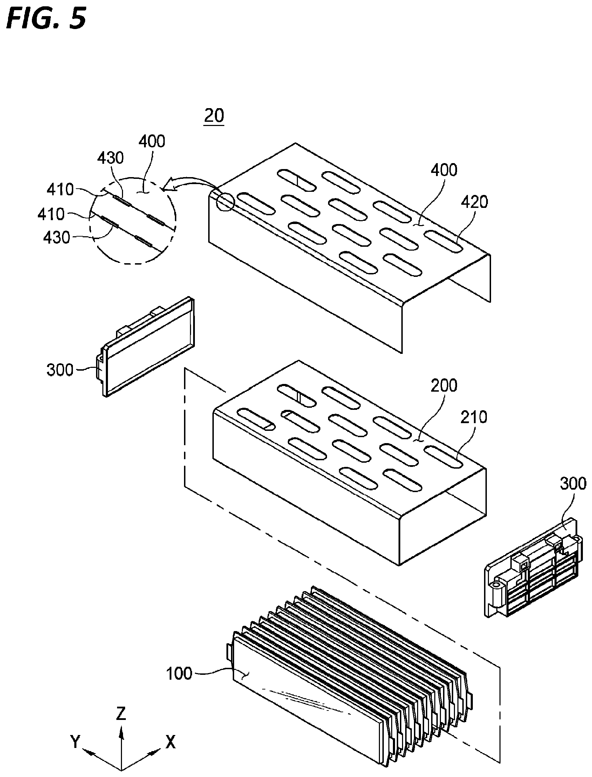

FIG. 5 is an exploded perspective view illustrating a battery module according to a second embodiment of the present disclosure.

Referring to FIG. 5, a battery module 20 according to the second embodiment is substantially the same as the battery module according to the first embodiment described with FIGS. 2 to 4, except that a plurality of openings 430 is formed in each of the folding portions 410. Thus, the description of the same configuration will be omitted.

In the battery module 20 according to the second embodiment, the plurality of openings 430 are formed by cutting through the limited regions in each of the folding portions 410 along the longitudinal direction (Y-axis direction).

According to an embodiment, the openings 430 may have a slit shape, and then, a cross-section perpendicular to the depth direction, for example, a cross-section in the horizontal direction, may be formed in a rectangular shape.

The openings 430 alleviate the stress generated at the edge of the cover frame 400 and improve flexibility when the folding portions 410 are folded. This may further improve the adhesion between both side surfaces of the cover frame 400 and both side surfaces of the module frame 200.

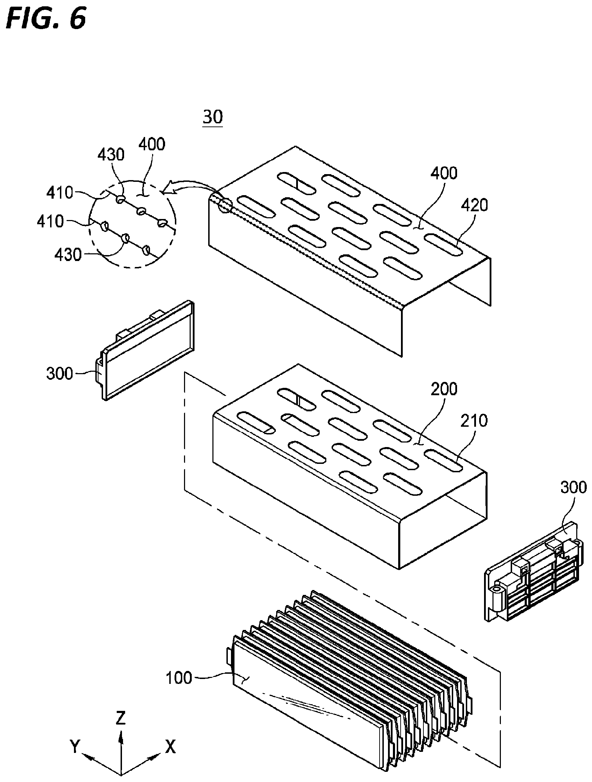

FIG. 6 is an exploded perspective view illustrating a battery module according to a third embodiment of the present disclosure.

Referring to FIG. 6, a battery module 30 according to the third embodiment is substantially the same as the battery module according to the first embodiment described with FIGS. 2 to 4, except that a plurality of openings 430 is formed in each of the folding portions 410. Thus, the description of the same configuration will be omitted.

In the battery module 30 according to the third embodiment, the openings 430 are formed by cutting through the limited regions in each of the folding portions 410 along the longitudinal direction.

According to an embodiment, the openings 430 may have a hole shape, and then, a cross-section perpendicular to the depth direction, for example, a cross-section in the horizontal direction, may be formed in a circular shape.

The openings 430 alleviate the stress generated at the edge of the cover frame 400 and improve flexibility when the folding portions 410 are folded. This may further improve the adhesion between both side surfaces of the cover frame 400 and both side surfaces of the module frame 200.

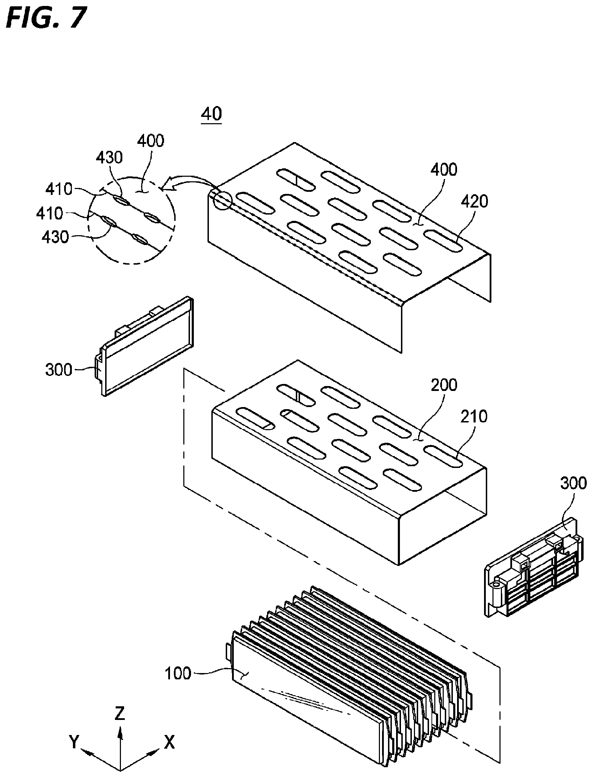

FIG. 7 is an exploded perspective view illustrating a battery module according to a fourth embodiment of the present disclosure.

Referring to FIG. 7, a battery module 40 according to the fourth embodiment is substantially the same as the battery module according to the first embodiment described with FIGS. 2 to 4, except that a plurality of openings 430 is formed in each of the folding portions 410. Thus, the description of the same configuration will be omitted.

In the battery module 40 according to the fourth embodiment, the openings 430 are formed by cutting through the limited regions in each of the folding portions 410 along the longitudinal direction (Y-axis direction).

Here, the openings 430 may have a hole shape, and then, a cross-section perpendicular to the depth direction, for example, a cross-section in the horizontal direction, may be formed in an oval shape.

The openings 430 alleviate the stress generated at the edge of the cover frame 400 and improve flexibility when the folding portions 410 are folded. This may further improve the adhesion between both side surfaces of the cover frame 400 and both side surfaces of the module frame 200.

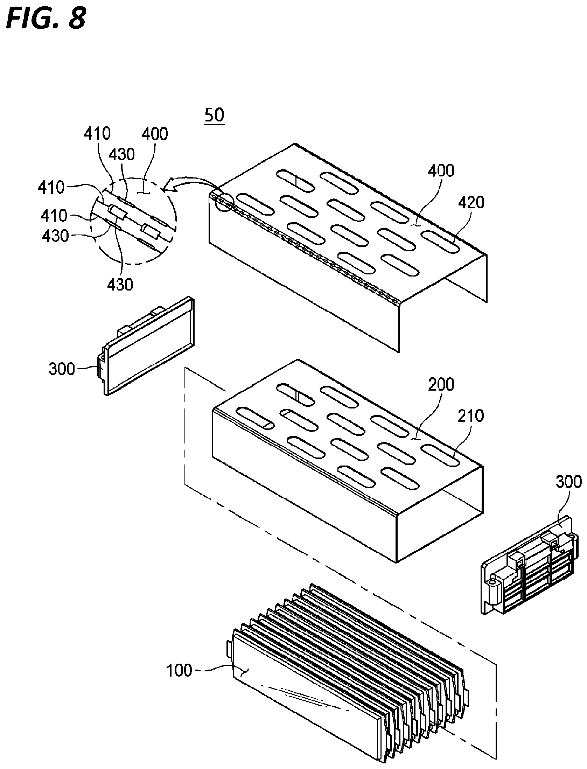

FIG. 8 is an exploded perspective view illustrating a battery module according to a fifth embodiment of the present disclosure.

Referring to FIG. 8, a battery module 50 according to the fifth embodiment is substantially the same as the battery module according to the first embodiment described with FIGS. 2 to 4, except that a plurality of openings 430 is formed in each of the folding portions 410. Thus, the description of the same configuration will be omitted.

In the battery module 50 according to the [0001] fifth embodiment, three or more folding portions 410 may be formed. The openings 430 are formed by cutting through the limited regions in each of the folding portions 410 along the longitudinal direction (Y-axis direction).

Here, the area of the openings 430 formed in the upper most side folding portion 410 among the folding portions 410 is the same as the area of the openings 430 formed in the lower most side folding portion 410.

Meanwhile, according to an embodiment, the area of the openings 430 formed in the folding portion 410, which is formed at the center between the upper most side folding portion 410 and the lower most side folding portion 410, is wider than the area of the openings 430 formed in the upper most side folding portion 410.

For example, the area of the openings 430 formed in the folding portion 410 positioned at the center may be formed to be wider, so that the folding portions 410 may be formed in shapes having different areas.

The structure described above may alleviate the stress that occurs more strongly at the center than at the ends of the edge portion when both side surfaces of the cover frame 400 are folded.

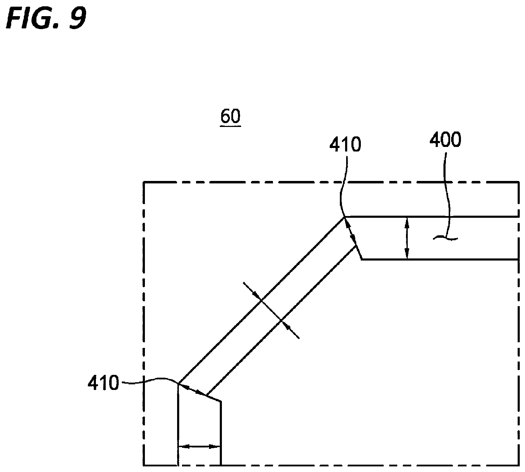

FIG. 9 is a vertical cross-sectional view of the corner portion of the cover frame in a battery module according to a sixth embodiment of the present disclosure.

Referring to FIG. 9, a battery module 60 according to the sixth embodiment is substantially the same as the battery module according to the first embodiment described with FIGS. 2 to 4, except for the differences in thickness at different locations of the cover frame 400. Thus, the description of the same configuration will be omitted.

The cover frame 400 formed in the battery module 60 according to the sixth embodiment has a thinner thickness at the corner and the position where the folding portions 410 are formed, than at the top surface and both side surfaces.

In the cover frame 400 having the structure described above, the flexibility is improved at the corner and the position of the folding portions 410, and thus there is an advantage in that the adhesion is further improved when both side surfaces are folded and are brought into close contact with the side surfaces of the module frame 200.

In a modified example, the portions of the corner and the folding portions 410 of the cover frame 400 may be made of a material having improved flexibility and elasticity compared to the material of the top surface and both side surfaces of the cover frame 400.

The present disclosure may be a battery pack including the above-described battery module, and may be a device including the battery module or the battery pack.

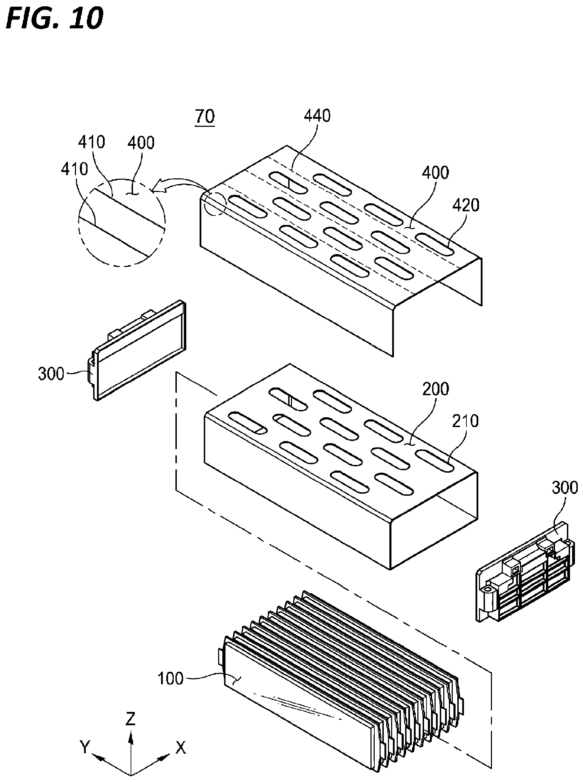

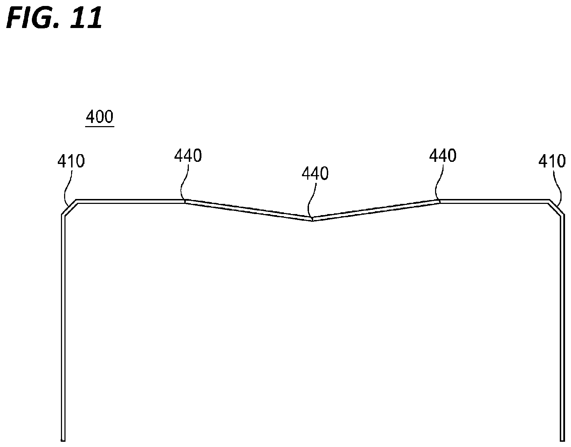

FIG. 10 is an exploded perspective view illustrating a battery module 70 according to a seventh embodiment of the present disclosure, and FIG. 11 is a vertical cross-sectional view of the cover frame in the battery module 70 according to the seventh embodiment of the present disclosure.

Referring to FIG. 10 and FIG. 11, the battery module 70 is substantially the same as the battery module according to the first embodiment described with FIGS. 2 to 4, except that a folding line 440 is formed on the cover frame 400. Thus, the description of the same configuration will be omitted.

In the battery module 70 according to the seventh embodiment, one or more folding lines 440 extending in the longitudinal direction (Y-axis direction) are formed on the top surface of the cover frame 400.

The folding line 440 allows the top surface of the cover frame 400 to bend in the vertical direction (Z-axis direction), so that when the cover frame 400 is mounted on the module frame 200, the top surface of the cover frame 400 is brought into closer contact with the top surface of the module frame 200.

The folding line 440 may prevent or suppress a gap from occurring between the cover frame 400 and the module frame 200 due to a phenomenon in which the top surface of the module frame 200 is sagging downward. The phenomenon is caused by shrinkage during extrusion processing.

Furthermore, since the occurrence of the gap between the cover frame 400 and the module frame 200 is suppressed by the folding line 440, there is an advantage in that it is possible to prevent or suppress a situation in which the cover frame 400 is detached from the module frame 200 and does not perform a fire backflow phenomenon prevention function when thermal runaway, and the like, occur in the battery module.

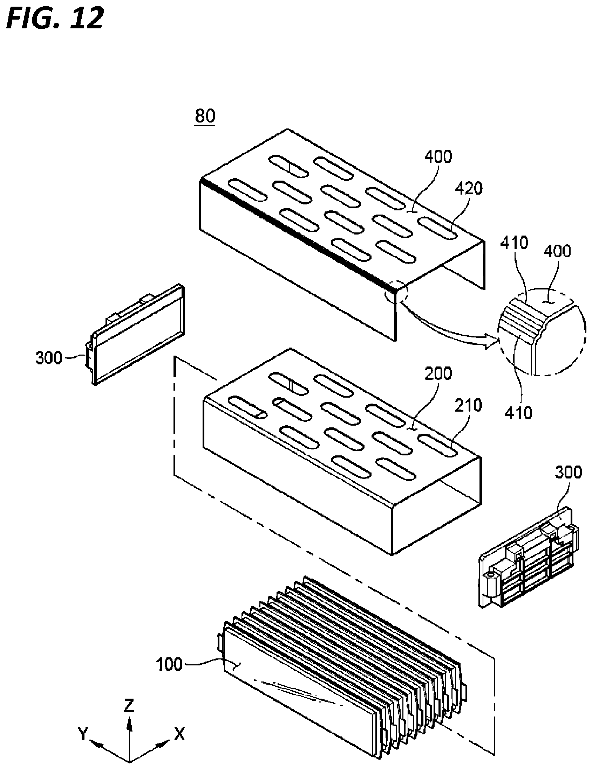

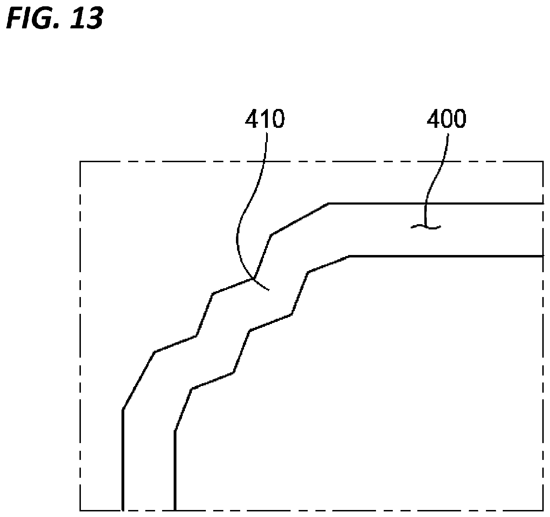

FIG. 12 is an exploded perspective view illustrating a battery module 80 according to an eighth embodiment of the present disclosure, and FIG. 13 is a vertical cross-sectional view of the corner portion of the cover frame in the battery module 80 according to the eighth embodiment of the present disclosure.

Referring to FIGS. 12 and 13, the battery module 80 according to the eighth embodiment is substantially the same as the battery module according to the first embodiment described with FIGS. 2 to 4, except for the shape of the folding portion 410. Thus, the description of the same configuration will be omitted.

In the battery module 80 according to the eighth embodiment, the folding portion 410 of the cover frame 400 is formed to have a vertical cross-section (XZ-axis plane) in a zigzag shape.

The zigzag shape of the folding portion 410 facilitates folding, so that the side surface of the cover frame 400 is more easily brought into close contact with the side surface of the module frame 200. Then, there is an advantage in that it is possible to prevent or suppress the cover frame 400 from being detached from the module frame 200 when thermal runaway, etc. occur.

Also, the zigzag-shaped folding portion 410 alleviates the stress applied to the folding portion 410 when the side surface of the cover frame 400 is folded. Then, there is an advantage in that it is possible to prevent or suppress the damage to the folding portion 410.

Meanwhile, the vertical cross-section of the folding portion 410 may be formed as an uneven portion or into a wavy shape. The present disclosure is not limited thereto as long as the shape enables alleviation of the stress applied to the folding portion 410 when the side surface of the cover frame 400 is folded.

While the embodiments of the present disclosure have been described, it will be appreciated by one of ordinary skill or knowledge in the art that the embodiments of the present disclosure may be changed or modified in various ways within the scope that does not depart from the technical scope of the various embodiments of the present disclosure defined in the claims attached herein below. Therefore, the technical scope of the various embodiments of the present disclosure is not limited to that in the Detailed Description section above, and may be defined by the claims.

### (Description of Reference Symbols)

10, 20, 30, 40, 50, 60, 70, 80 : Battery module
100: Battery cell
200: Module frame
210: First through hole
300: End plate
400: Cover frame
410: Folding portion
420: Second through hole
430: Opening
440: Folding line

## Claims

1. A battery module comprising:
a plurality of battery cells;
a module frame configured to accommodate the plurality of battery cells;
end plates positioned on a front side and a rear side of the plurality of battery cells, respectively; and
a cover frame configured to cover a top surface and both side surfaces of the module frame,
wherein two or more folding portions are formed on each edge of the cover frame.

2. The battery module according to claim 1, wherein a plurality of first through holes is formed by cutting through limited regions on the top surface of the module frame.

3. The battery module according to claim 2, wherein a plurality of second through holes is formed by cutting through limited regions on the top surface of the cover frame.

4. The battery module according to claim 1, wherein the cover frame is made of a material having heat resistance and flame retardancy.

5. The battery module according to claim 4, wherein the material includes one or more of mica and fiberglass reinforced plastic (FRP).

6. The battery module according to claim 1, wherein a plurality of openings is formed by cutting through limited regions in the folding portions along a longitudinal direction.

7. The battery module according to claim 6, wherein the openings have a slit or hole shape.

8. The battery module according to claim 6, wherein the openings are formed with different areas.

9. The battery module according to claim 8, wherein three or more folding portions are formed,
the openings in the folding portion positioned on an uppermost side and the folding portion positioned on a lowermost side have the same area, and
the openings formed in the folding portion formed between the folding portion positioned on the uppermost side and the folding portion positioned on the lowermost side have a wider area than those in the folding portion positioned on the uppermost side.

10. The battery module according to claim 2, wherein a thickness of the folding portions is formed to be thinner than a thickness of a top surface and a thickness of a side surface of the cover frame.

11. The battery module according to claim 1, wherein on a top surface of the cover frame, one or more folding lines extending in a longitudinal direction are formed to allow bending at a predetermined angle.

12. The battery module according to claim 1, wherein the folding portions has a vertical cross section in a zigzag shape.

13. A battery pack comprising the battery module according to claim 1.

14. A battery module case comprising:
a module frame configured to accommodate a plurality of battery cells;
end plates positioned on a front side and a rear side of the plurality of battery cells, respectively, when the plurality of battery cells are accommodated in the module frame; and
a cover frame covering a top surface and both side surfaces of the module frame,
wherein two or more folding portions, which are designed to have a weaker elastic strength than that of other portions of the cover frame, are formed on each edge of the cover frame.

15. The battery module case according to claim 14, wherein a plurality of through holes is formed by cutting through limited regions on a top surface of the cover frame.

16. The battery module case according to claim 14, wherein the cover frame is made of a material having heat resistance and flame retardancy.

17. The battery module case according to claim 16, wherein the material includes one or more of mica and fiberglass reinforced plastic.

18. The battery module case according to claim 14, wherein a plurality of openings is formed by cutting through limited regions in the folding portions along a longitudinal direction.

19. The battery module case according to claim 18, wherein the openings have a slit or hole shape.

20. The battery module case according to claim 14, wherein, on a top surface of the cover frame, one or more folding lines extending in a longitudinal direction are formed to allow bending at a predetermined angle.
